Europäisches Patentamt

European Patent Office

Office européen des brevets

(11) Veröffentlichungsnummer: **0 058 353**
**B1**

## (12) EUROPÄISCHE PATENTSCHRIFT

(45) Veröffentlichungstag der Patentschrift:
30.05.84

(21) Anmeldenummer: 82100818.2

(22) Anmeldetag: 05.02.82

(51) Int. Cl.³: **B 01 D 19/00,** B 04 B 1/02,
B 04 B 11/02

(54) Verfahren zur Entgasung von Flüssigkeiten und Vorrichtung zur Durchführung des Verfahrens.

(30) Priorität: 18.02.81 DE 3105914

(43) Veröffentlichungstag der Anmeldung:
25.08.82 Patentblatt 82/34

(45) Bekanntmachung des Hinweises auf die Patenterteilung:
30.05.84 Patentblatt 84/22

(84) Benannte Vertragsstaaten:
**BE DE FR GB**

(56) Entgegenhaltungen:
**DD - A - 138 508**
**DE - B - 1 187 195**
**DE - C - 943 340**
**FR - A - 1 320 734**
**FR - A - 1 382 516**
**FR - A - 2 248 862**
**FR - A - 2 260 618**
**US - A - 1 587 800**
**US - A - 3 666 170**
**US - A - 3 765 602**
**US - A - 4 299 352**

(73) Patentinhaber: **AGFA-GEVAERT Aktiengesellschaft,**
**D-5090 Leverkusen 1 (DE)**

(72) Erfinder: **Hofmann, Hans, Dipl.-Ing., Thurner Strasse 39,**
**D-5000 Köln 80 (DE)**
Erfinder: **Broerken, Herbert, Ing.grad., Eggenweg 38,**
**D-5650 Solingen (DE)**
Erfinder: **Hoffacker, Franz, Dipl.-Ing., Schumannweg 11,**
**D-4018 Langenfeld (DE)**

## Beschreibung

Die Erfindung betrifft ein Verfahren zur Entgasung von Flüssigkeiten, insbesondere von Suspensionen und Emulsionen, im Unterdruck unter Anwendung von Zentrifugalkraft zur Erzeugung einer dünnen Flüssigkeitsschicht und eine Vorrichtung zur Durchführung des Verfahrens, bestehend aus einem konischen Rotationskörper, in dessen Innenraum ein Unterdruck aufrechterhalten wird, einer Zuführ- und Verteileinrichtung für die zu entgasende Flüssigkeit und einer Einrichtung zum Abführen der entgasten Flüssigkeit und des Gases.

Viele Produkte der chemischen, der pharmazeutischen, der Lebensmittel- und verwandten Industrie, insbesondere hochviskose Flüssigkeiten, Pasten, Suspensionen, Emulsionen oder dergleichen enthalten Luft oder Gase gelöst oder in Form von kleinen Blasen, die bei der Herstellung unvermeidbar in die Flüssigkeit eingearbeitet werden, im Endprodukt jedoch nicht enthalten sein sollen oder dürfen. So beeinträchtigen beispielsweise Gasblasen in photographischen Emulsionen in erheblichem Masse die Qualität der mit diesen Emulsionen hergestellten Filme oder Photopapiere, indem die Gasblasen oder -bläschen den Volumenstrom an den Beschichtungseinrichtungen stören und Streifen verursachen, die die photographischen Materialien unbrauchbar machen.

Verfahren zum Entgasen von Flüssigkeiten in einer Zentrifuge, bei dem die Flüssigkeit in Form einer dünnen Schicht einer möglichst senkrecht auf sie wirkenden Radialbeschleunigung bei einem oberhalb des Dampfdrucks der flüssigen Phase liegenden Umgebungsdruck ausgesetzt wird, sind zum Beispiel aus der DD-A– 138 508 bekannt. In dem unter Unterdruck stehenden Zentrifugalfeld wirkt auf die in der Flüssigkeit enthaltenen Gasblasen ein nach innen gerichteter Auftrieb, der diese von aussen nach innen transportiert. Als besonders zweckmässig hat sich die Entgasung in einem am inneren Umfang eines Zentrifugenrotors strömenden Filmes erwiesen. Dies hat vor allem den Vorteil, dass sich in der Flüssigkeit nur ein verhältnismässig kleiner Überdruck gegenüber den an der Filmoberfläche herrschenden Aussendruck des Gasraumes einstellt. Dadurch bleibt nur wenig Gas in der Flüssigkeit gelöst. Bei Entgasungszentrifugen mit höherem Flüssigkeitsstand wie sie aus der Patentliteratur bekannt sind und in der Technik angewandt werden, ist dieser Umstand offensichtlich nicht beachtet, was die nachteilige Folge hat, dass insbesondere die feinen Teilchen durch Lösung und anschliessend wieder stattfindende Blasenbildung dem Entgasungsvorgang entzogen werden.

Aus der DE-C- 2 147 124 ist eine Vorrichtung zum Entgasen von Flüssigkeiten bekannt, bei welcher die Flüssigkeit in einer Zentrifuge unter Vakuum behandelt wird und bei welcher sich die Flüssigkeit an der Innenwandung des Rotors der Zentrifuge zu einem strömenden Film ausbreitet und in einen blasenarmen und einen blasenreichen Anteil aufgeteilt wird. Damit nun der blasenreiche Teil vom blasenarmen Teil getrennt werden kann, befindet sich an der Stelle, an der die Flüssigkeit den Rotor nach aussen verlässt, ein schneidenförmiger Überlaufteil, an dessen einer Seite blasenreiche Flüssigkeit vorbeigeht, die erneut in den Rotor zur Behandlung eingegeben wird, und an deren anderer Seite Flüssigkeit mit sich verringernder Umfangsgeschwindigkeit abgenommen wird, die verhältnismässig blasenarm sein soll. Zwar ist die dort abgenommene Flüssigkeit im Vergleich zur Flüssigkeit, die in den Rotor vor dem Entgasen eingeführt wird, blasenärmer, eine ausreichende Blasenfreiheit wird jedoch nicht erreicht. Dies ist vor allem darauf zurückzuführen, dass die sich an der Rotorwandung bewegende Flüssigkeitsschicht noch mehr oder weniger viel Blasen enthält, weil die Zentrifugalkräfte nicht ausreichen, um zu bewirken, dass die Blasen sich in dem von der Rotorwandung abgewandten Teil der Flüssigkeit ansammeln. Darüber hinaus sind technische Schwierigkeiten beim Bau und im Betrieb einer solchen Anlage wohl der Grund dafür, dass eine solche Anlage bisher nicht auf dem Markt zu finden ist.

Aus der britischen Offenlegungsschrift GB-A-2008971 ist ein Verfahren und eine Vorrichtung bekannt, bei welchen eine Flüssigkeit mit einem gleichzeitig zugeführten Gas einer ersten Unterdruckentgasung unterzogen wird und in einer zweiten Phase mit einem Zentrifugalrotor weiter entgast wird und sich als eine ringförmige Flüssigkeitsschicht in einem Pumpenteil sammelt und durch Zentrifugalkräfte gegen den im System herrschenden Unterdruck ausgetragen wird.

Die Vorrichtung und das Verfahren haben erhebliche Nachteile, da sich zwischen dem Zentrifugalrotor und den Gehäusewandungen und zwischen den Pumpenrotoren und den Wandungen Flüssigkeit ansammelt und fliesst, die erheblichen Scherkräften ausgesetzt ist. Hierdurch wird durch Reibung Wärme erzeugt, die nicht kontrollierbar ist. Die erzeugte Wärme führt zu Verkrustungen, die, wenn sie sich lösen, Klümpchen bilden, die bei photographischen Emulsionen noch grössere Nachteile mit sich bringen als Bläschen. Bei zu starker Erwärmung leidet die Qualität der photographischen Emulsion in erheblichem Masse. Durch die Herausführung der Flüssigkeit am Umfang der Pumpe entstehen erhebliche Störungen in der Strömung die zu erneuten Bläschen führen können.

Der Erfindung liegt die Aufgabe zugrunde ein Verfahren und eine Vorrichtung der eingangs genannten Art zu schaffen, mit der es auf einfache Weise möglich ist, eine Flüssigkeit kontinuierlich und weitgehend vollkommen und gleichmässig zu entgasen und den Entgasungsgrad zu regeln.

Diese Aufgabe wird bei einem Verfahren der eingangs genannten Art gemäss der Erfindung dadurch gelöst, dass

a) die zu entgasende Flüssigkeit über eine hohlgebohrte feststehende Achse in einen Rotationskörper eingeleitet und auf eine mitrotierende Fläche aufgespritzt wird,

b) die Flüssigkeit auf eine sich konisch erweiternde Innenfläche des Rotationskörpers geleitet und zu einem dünnen unter Unterdruck stehendem Flüssigkeitsfilm ausgebreitet wird und sich unter dem Einfluss der Zentrifugalkraft auf der sich erweiternden konischen Fläche des Rotationskörpers weiter verdünnt, entgast und zu einem ringförmigen Sammelraum fliesst und

c) die entgaste blasenfreie Flüssigkeit zur Mitte des Zentrifugenraumes geleitet und gegen den Unterdruck durch die hohlgebohrte feststehende Achse aus dem Rotationskörper ausgetragen wird.

Das erfindungsgemässe Verfahren zeigt in überraschender Weise eine ausgezeichnete Entgasungsleistung und vermeidet die Nachteile der obengenannten Verfahren. Durch das Aufspritzen der zu entgasenden Flüssigkeit aus der zentralen hohlgebohrten Achse auf die schnell rotierende Fläche wird die Flüssigkeit in einer ersten Entgasungsphase in zerplatzende Tröpfchen aufgespalten die im Unterdruck bereits einen grossen Teil der Gasbläschen freigeben. Durch die Überleitung der Flüssigkeit auf konische Flächen im Rotationskörper wird die Flüssigkeit durch die Zentrifugalkraft gefördert und deren Schichtdicke weiter verringert, so dass selbst kleinste Gasbläschen und gelöstes Gas bei sehr kurzen Diffusionswegen in den Unterdruckraum austreten und abgeführt werden. Die Entnahme der entgasten Flüssigkeit, die in die Mitte des Zentrifugenraumes geleitet wird und durch die feststehende Achse ausgetragen wird, ist völlig unproblematisch und vermeidet die Erzeugung neuer Bläschen.

Eine Verbesserung des Verfahrens kann dadurch erreicht werden, dass die zu entgasende Flüssigkeit vor dem Eintritt in den Rotationskörper über eine scharfkantige Blende oder Drossel einem plötzlichen Drucksprung zur Vorentgasung unterworfen wird.

Durch die plötzliche Entspannung der Flüssigkeit an der scharfkantigen Blende oder Drossel wird bereits ein Teil des in der Flüssigkeit enthaltenen Gases spontan frei und bildet Bläschen, die in das Verfahren mit eingebracht und darin sofort ausgeschieden werden.

Besonders vorteilhaft zeigt sich ein erster Verfahrensschritt für die Trennung von Gas und Flüssigkeit, insbesondere für höher viskose Flüssigkeiten dadurch, dass die in den Rotationskörper eingeleitete Flüssigkeit zuerst auf eine Verteilervorrichtung aufgespritzt wird und auf konischen mitrotierenden Rohren entlangfliesst oder auf ein zylindrisches Rohr auftrifft und von Verteilern mehrmals schlagartig abgebremst, von der Fläche abgelöst und wieder auf die Fläche geschleudert wird.

Durch das häufige Verspritzen der Flüssigkeit in der Verteilervorrichtung, wobei Teile der Flüssigkeit von dem rotierenden Rohr abgetrennt werden und als Tröpfchen oder Nebel eine Flugstrecke im Unterdruck zurücklegen, ist bereits in dieser ersten Stufe eine Entgasung mit grossem Erfolg möglich.

Nach der Entgasung der Flüssigkeit ist es von besonderer Wichtigkeit, dass ein Verfahren mit der Möglichkeit gefunden wird, das die Flüssigkeit ohne Störungen aus dem Zentrifugenraum herausführt, ohne dass Bläschen entstehen. Als besonders vorteilhaft hat sich ein Verfahren gezeigt, welches sich dadurch auszeichnet, dass die Flüssigkeit aus dem ringförmigen Sammelraum mittels einer feststehenden Entnahmescheibe unterhalb der Oberfläche des Flüssigkeitsringes im ringförmigen Sammelraum entnommen wird.

Überraschenderweise zeigt sich, dass bei einer Entnahme der mit Gas untersättigten Flüssigkeit mit einer Entnahmescheibe, die in den rotierenden Flüssigkeitsring eintaucht, keinerlei Wirbel entstehen, die zu Gasbläschen führen. Trotz des erheblichen Druckes der schnell rotierenden Flüssigkeit gegen die stromlinienförmige Scheibe und die Entnahmebohrung in der Entnahmescheibe, tritt eine deutliche Beruhigung der Flüssigkeit ein. Je weiter der Flüssigkeitsring zu der Zentrifugenmitte ansteigt, desto höher wird der radial nach aussen wirkende Druck und entsprechend ruhiger die Stromlinien in unmittelbarer Nähe der Entnahmestelle.

Vorteilhafterweise wird die entgaste Flüssigkeit aus dem konischen Rotationskörperraum über eine mitrotierende Lochscheibe dem ringförmigen Sammelraum zugeführt, wodurch der durch den konischen Rotationskörper axial beschleunigte Flüssigkeitsfilm abgebremst wird und sich gleichmässig auf den Flüssigkeitsring auflegt, ohne auf die Entnahmescheiben zu prallen und zu Verwirbelungen zu führen.

In einem besonders vorteilhaften Verfahren wird die Dicke des Flüssigkeitsringes bei konstantem Auslauf der Flüssigkeit in den Rotationskörperraum durch Regelung des Volumenstromes am Einlaufventil konstant gehalten.

Auf diese Weise wird eine stets gleichmässige Entgasung und eine gleiche Verweilzeit der Flüssigkeit in dem Verfahren erreicht.

Die Regelung des Volumenstromes am Einlaufventil kann nach den verschiedensten Verfahren erfolgen.

Zur optischen Erfassung der Dicke des Flüssigkeitsringes wird in das Zentrifugengehäuse ein Sichtfenster eingearbeitet und dieses synchron mit der Drehzahl des Gehäuses mit einem Stroboskop angeblitzt, so dass der Flüssigkeitsstand unter dem Sichtfenster bei jeder Umdrehung einmal sichtbar wird. Die Dicke des Flüssigkeitsringes kann so optisch erfasst und das Einlaufventil manuell oder durch einen Regler so eingestellt werden, dass die Dicke des Flüssigkeitsringes konstant bleibt.

Ein anderes Verfahren zeichnet sich dadurch aus, dass der Druck, den der Flüssigkeitsring auf die Innenfläche des Rotationskörpers ausübt als Messwert erfasst und zur Durchflussregelung verwendet wird. Hierbei übt der rotierende Flüssigkeitsring auf die Innenfläche des Rotationskörpers einen Druck aus, der von den Parametern

a) der Dichte der Flüssigkeit

b) der Drehzahl des Rotationskörpers

c) der Differenz des äusseren zum inneren Durchmesser des Flüssigkeitsringes

abhängig ist. Wenn a) und b) konstant gehalten werden, bewirkt eine Änderung der Flüssigkeitshöhe eine Druckänderung, die zur Regelung verwendet wird.

In einem weiteren Verfahren wird die Reibung des rotierenden Flüssigkeitsringes an der feststehenden Entnahmescheibe als Messwert erfasst und zur Durchflussregelung verwendet. Die Reibung erzeugt einen Leistungsverlust, der in Wärme umgesetzt wird. Um die Drehzahl konstant zu halten, muss die Antriebsleistung des antreibenden Motores erhöht werden. Der Leistungsverlust ist hierbei abhängig von der Scherflächengrösse, damit von der Dicke des Flüssigkeitsringes und von der Viskosität. Wird die Viskosität, wie üblich, konstant gehalten, so kann die Leistungsaufnahme des Motores als Regelgrösse zur Regelung des Volumenstromes am Einlauf verwendet werden.

In einem anderen Verfahren werden Torsionsmessungen verwendet, wobei bei einer elastisch gelagerten Entnahmescheibe die Auslenkung der Entnahmescheibe durch die Dicke des Flüssigkeitsringes zur Durchflussregelung verwendet wird, oder es wird eine Leitfähigkeitsmessung verwendet, wobei die Dicke des Flüssigkeitsringes mit Leitfähigkeitssensoren ermittelt und der ermittelte Wert zur Durchflussregelung verwendet wird.

Von besonderem Vorteil ist ein Verfahren für Flüssigkeiten, die sehr temperaturempfindlich sind oder die eine optimale Entgasung bei einer bestimmten Temperatur erreichen, indem es sich dadurch auszeichnet, dass die zu entgasende Flüssigkeit während ihrer Ausbreitung auf der Innenwandung des Rotationskörpers durch Erhitzen oder Kühlen des Rotationskörpers von aussen temperiert wird.

Es tritt zum Beispiel durch die Flüssigkeitsreibung in der Vorrichtung eine Erwärmung der Flüssigkeit auf. Die Erwärmung ist abhängig von der Viskosität, der Dicke des Flüssigkeitsringes, dem Volumendurchsatz und der Umfangsgeometrie der Entnahmescheibe. Diese Erwärmung ist insbesondere bei photographischen Emulsionen nicht erwünscht.

Die Ausbreitung der Emulsion in dem konischen Rotationskörper zu einem dünnen Film kann mit grossem Erfolg dazu verwendet werden, einen intensiven Wärmeaustausch herbeizuführen. Der Rotationskörper kann zum Beispiel durch die ihn umgebende Luft gekühlt werden, wobei dieser mit Kühlrippen versehen wird. Vorteilhafter ist ein Besprühen des Aussenmantels des Rotationskörpers mit einer Kühlflüssigkeit. Durch Regelung der Kühlmittelmenge kann hierbei eine sehr genaue Temperaturführung erreicht werden. Der Rotationskörper kann zur Kühlung oder Heizung mit Wasser auch mit einem Mantel versehen werden, durch den die Flüssigkeit geleitet wird.

Die Aufgabe wird bei einer Vorrichtung zur Durchführung des Verfahrens der eingangs genannten Art gemäss der Erfindung dadurch gelöst, dass

a) auf einer feststehenden Achse ein konischer Rotationskörper drehbar und von aussen antreibbar angeordnet ist,

b) die feststehende Achse zum Einlauf der zu entgasenden Flüssigkeit hohlgebohrt und mit mindestens einer Einlauföffnung oder -düse zum Einspritzen der Flüssigkeit in den Innenraum des Rotationskörpers versehen ist,

c) für die eingespritzte Flüssigkeit eine Verteilervorrichtung in dem Rotationskörper vorgesehen ist, die mitrotiert,

d) am weiten Ende des konischen Rotationskörpers ein ringförmiger Sammelraum für die entgaste Flüssigkeit vorgesehen ist,

e) zur Entnahme der entgasten Flüssigkeit eine Entnahmescheibe, mit einer tangentialen Vertiefung und einer Bohrung versehen, an der feststehenden Achse befestigt ist und in den ringförmigen Sammelraum hineinragt,

f) die feststehende Achse mit einer Austragbohrung versehen ist, durch welche die entgaste Flüssigkeit von der Entnahmescheibe abführbar und aus dem Innenraum des Rotationskörpers herausführbar ist und

g) die feststehende Achse eine weitere Bohrung besitzt, durch welche das Gas abführbar und der Rotationskörperraum auf Unterdruck bringbar ist.

Die Vorrichtung zeigt überraschenderweise erhebliche Vorteile gegenüber denen, die aus dem Stand der Technik bekannt sind. Durch die feststehende hohlgebohrte Achse kann die zu entgasende Flüssigkeit in einfacher Weise zu- und abgeführt werden. Der Unterdruck kann ebenfalls durch eine Bohrung in dem rotierenden Zentrifugenraum erzeugt und aufrechterhalten werden, so dass der Rotationskörper auf der feststehenden Achse frei rotieren kann. Sedimentation von Feststoffteilchen und starke Erwärmung durch Scherbeanspruchungen treten nicht auf. Die Dichtungen des Rotationskörpers werden von der zu entgasenden Flüssigkeit nicht berührt und bei der Entnahme der entgasten Flüssigkeit aus dem Unterdruckraum entstehen keine neuen Bläschen, die bei der Weiterverarbeitung zu Störungen führen könnten.

Durch die Anordnung einer Verteilervorrichtung in dem Zentrifugenraum wird eine erste Entgasung erreicht, indem die Flüssigkeit auf rotierende Flächen einer Verteilervorrichtung aufgespritzt werden und bei der Fallzeit der Flüssigkeit die Blasen infolge des gleichzeitigen Unterdruckes an Volumen zunehmen und platzen.

Die konische Innenfläche des Rotationskörpers sorgt mit dem zunehmenden Durchmesser zugleich für eine Verringerung der Schichtdicke und somit für eine weitere Entgasung des Flüssigkeitsfilmes und für den Transport der Flüssigkeit zu einem ringförmigen Sammelraum.

Die Herausführung der entgasten Flüssigkeit aus dem unter Unterdruck stehenden Rotationskörper ist bei allen Unterdruck-Zentrifugal-Entgasern sehr problematisch. In der Vorrichtung wurde dieses Problem auf eine überraschend einfache und optimale Weise gelöst, indem an der feststehenden Achse eine Entnahmescheibe befestigt ist, die mit ihrer Aussenkante in den Flüssigkeitsring eintaucht. Die Scheibe ist so geformt, dass sie einerseits in dem Flüssigkeitsring einen örtlichen Überdruck erzeugt, der die Flüssigkeit veranlasst in eine Bohrung in der Scheibe zu fliessen, die mit der hohlgebohrten Achse in Verbindung steht und andererseits die übrige Strömung in der Ringfläche nicht so stört, dass eine Verwirbelung und Bläschen auftreten.

In einer Ausführungsform der Vorrichtung besteht die Verteilervorrichtung aus mindestens zwei konischen Rohren, die mit dem Rotationskörper rotieren. Die Flüssigkeit wird aus mindestens einer Öffnung in der feststehenden Achse auf ein inneres konisches Rohr gespritzt, axial und radial beschleunigt, auf ein zweites konisches Rohr gespritzt und axial beschleunigt und dann auf die eigentliche konische Fläche des Zentrifugenrotationskörpers gespritzt und wieder axial beschleunigt und zu einem sehr dünnen Film ausgebreitet, wodurch eine ausgezeichnete Entgasung erhalten wird.

In einer besonderen Ausführungsform der Vorrichtung besteht die Verteilervorrichtung aus einem zylindrischen und einem konischen Rohr und es sind an der feststehenden Achse Verteiler angebracht, die den Fluss der auf das zylindrische Rohr aufgespritzten Flüssigkeit unterbrechen. Durch die feststehenden Verteiler, die dicht an die zylindrische Rohrinnenwand heranreichen, wird die Flüssigkeit in vorteilhafter Weise in dem zylindrischen Raum verspritzt und vernebelt, so dass Gasbläschen und gelöstes Gas leicht in den Unterdruckraum austreten können. Es entsteht so eine Untersättigung der Flüssigkeit an Gas, so dass auch nach dem Austritt der Flüssigkeit aus der Vorrichtung keine Gasbläschen entstehen.

Eine gleichmässige und störungsfreie Verteilung der entgasten Flüssigkeit in den Ringraum wird in vorteilhafter Weise dadurch erreicht, dass am weiten Ende des konischen Rotationskörpers eine mit diesem mitrotierende Lochscheibe angeordnet ist, die die axiale Geschwindigkeit der Flüssigkeit in Folge der Zentrifugalkraft abbremst und Verwirbelungen vermeidet.

In einer besonders vorteilhaften Ausführungsform der Vorrichtung ist die Entnahmescheibe zumindest im Bereich des Eintauchens in den ringförmigen Sammelraum so stromlinienförmig ausgeführt, dass sie die Flüssigkeitsströmung nicht stört. Durch diese Massnahme wird eine Erwärmung der Flüssigkeit durch Reibung an der Scheibe erheblich verringert und es entstehen keine Verwirbelungen oder Strömungen, die zu Blasenbildung führen könnten.

Die Zuführung der zu entgasenden Flüssigkeit, der Anschluss der Unterdruckpumpe des Gases und die Abführung der entgasten Flüssigkeit können auch alle auf einer Seite der feststehenden Achse angeordnet sein, so dass der rotierende Körper mit nur einem Lager ausgestattet werden kann (nicht dargestellt).

Im folgenden wird eine Ausführungsform der Erfindung an Hand von Zeichnungen näher beschrieben: Es zeigen:

Fig. 1 eine Vorrichtung zur Entgasung von Flüssigkeiten mit Zentrifugalkraft im Unterdruck

Fig. 2 eine weitere Ausführungsform der Verteilervorrichtung der Vorrichtung nach Fig. 1

Fig. 3 einen Schnitt durch den Sammelraum für entgaste Flüssigkeit längs der Linie B–B (Fig. 1)

Fig. 4 eine vergrösserte Ansicht der Entnahmescheibe aus Fig. 3

Fig. 5 eine Aufsicht auf die Entnahmescheibe nach Fig. 4

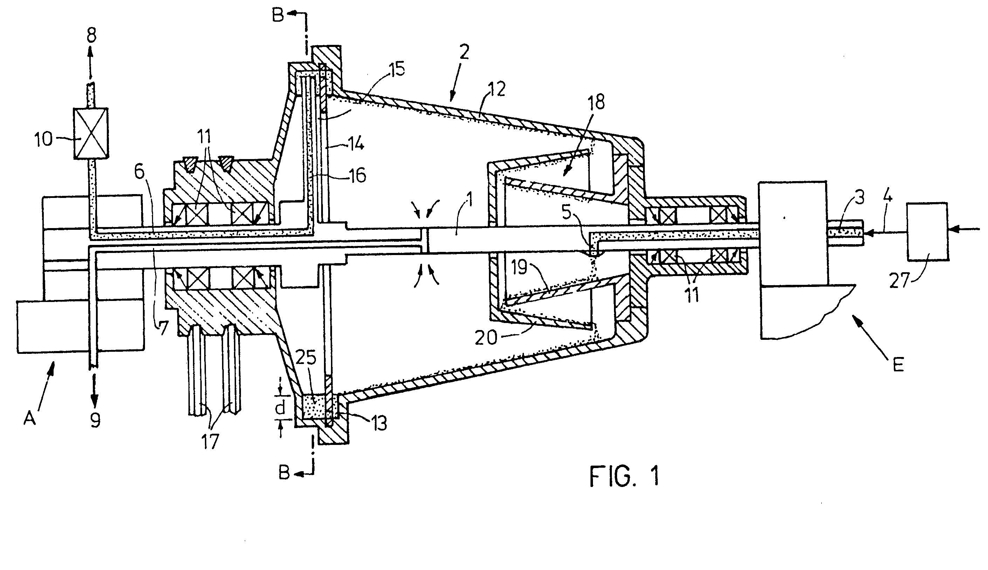

Die Vorrichtung besteht nach Fig. 1 aus einer festehenden Achse 1, die an ihren Enden gelagert ist und auf der ein Rotationskörper 2 frei drehbar gelagert ist. Die feststehende Achse 1 besitzt auf der Einlaufseite E eine axiale Bohrung 3 durch die die zu entgasende Flüssigkeit 4 in Pfeilrichtung in den Rotationskörper eingeleitet wird. Die Bohrung endet in dem Rotationskörper in mindestens einer radialen Bohrung 5 zur Verteilung der Flüssigkeit in den Innenraum des Rotationskörpers 2.

Es können eine oder mehrere radiale Bohrungen 5 angeordnet werden und die Bohrungen 5 können auch mit Düsen zum Verspritzen der zu entgasenden Flüssigkeit 4 versehen sein.

Auf der Auslaufseite A besitzt die feststehende Achse 1 zwei Bohrungen 6, 7. Die Bohrung 6 dient zum Austragen der entgasten Flüssigkeit 8 und die Bohrung 7 zum Absaugen der Luft und des Gases 9 aus dem Inneren des Rotationskörpers 2 zur Erstellung und Aufrechterhaltung eines Unterdruckes im Rotationskörper 2. Die Absaugung der Luft oder des Gases 9 erfolgt in üblicher Weise mit einer Vakuumpumpe in Pfeilrichtung. Die Herausführung der entgasten Flüssigkeit 8 erfolgt mit Hilfe des Staudruckes an der Entnahmescheibe durch die Hohlbohrung 6.

Der Rotationskörper 2 ist auf der Einlaufseite E auf der feststehenden Achse 1 drehbar gelagert und mit Dichtungen 11 abgedichtet und besitzt in Richtung zur Auslaufseite A eine sich konisch erweiternde Fläche 12 die in einem ringförmigen Sammelraum 13 zum Sammeln der entgasten Flüssigkeit 8 in einem Flüssigkeitsring 25 endet.

In dem Sammelraum 13 ist in den Rotationskörper 2 eine mitrotierende Lochscheibe 14 angeordnet, die die Aufgabe hat, den aufgrund der Zentrifugalkraft axial beschleunigten Flüssigkeitsfilm abzubremsen und gleichmässig in den Sammelraum 13 auf den Flüssigkeitsring 25 zu verteilen. In den ringförmigen Sammelraum 13 ragt eine feststehende kreissegmentförmige Scheibe 15, die an der feststehenden Achse 1 befestigt ist und mit einer Bohrung 16 den Sammelraum 13 mit der Achsenbohrung 6 verbindet, so dass die Flüssigkeit aus dem Sammelraum 13 des Rotationskörpers 2 herausgeführt werden kann. Der Rotationskörper 2 ist auf der Auslaufseite A, mit Dichtungen 11 abgedichtet, drehbar gelagert und besitzt eine Einrichtung zum Antrieb. Der Antrieb kann auf verschiedene Weise erfolgen, wie mit Zahnrädern, Reibrädern, Zahnriemen oder Keilriemen. Eine einfachste und hier dargestellte Antriebsart erfolgt mit Keilriemen 17, die von einem Motor (nicht dargestellt) angetrieben werden. Der Motor ist vorteilhafterweise so ausgeführt, dass eine gewünschte, dem Entgasungsproblem angepasste, Drehzahl gewählt und konstant gehalten werden kann.

Wird die zu entgasende Flüssigkeit 4 direkt auf die konischen Innenflächen 12 des Rotationskörper 2 aufgespritzt, so wird bereits eine gute Entgasung erreicht. Es hat sich aber gezeigt, dass es insbesondere für hochviskose Flüssigkeiten vorteilhaft ist, eine mitrotierende Verteilervorrichtung 18 auf der Einlaufseite E des Rotationskörpers anzuordnen, wodurch die Entgasung der Flüssigkeit 4 erheblich verbessert wird.

Die in Fig. 1 dargestellte Verteilervorrichtung 18 besteht aus sich konisch erweiternden Rohren 19, 20, die die Flüssigkeit zwei mal umlenken und zum Anfang der konischen Innenfläche 12 des Rotationskörpers 2 führen.

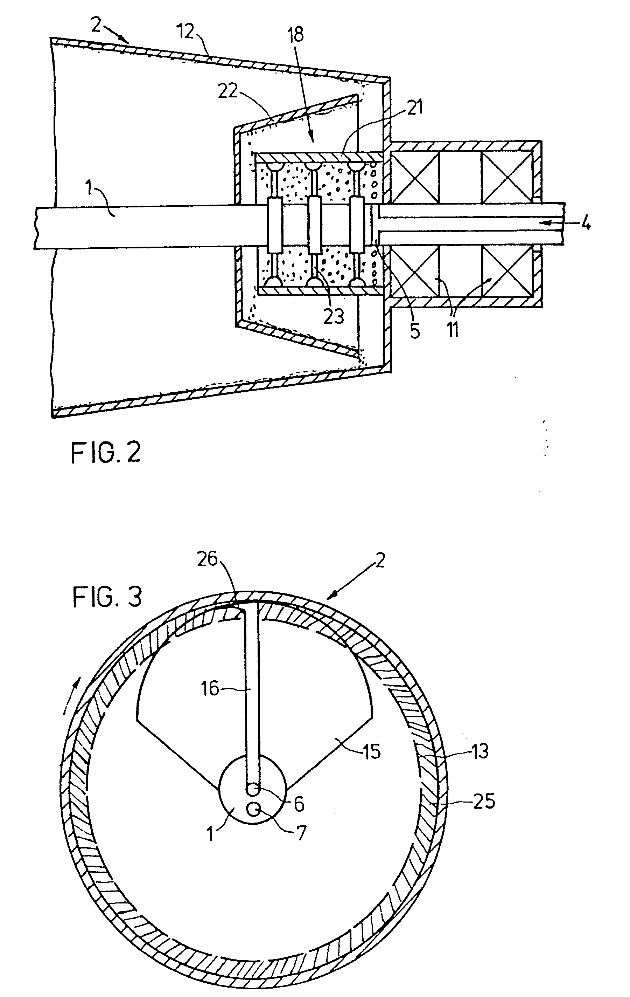

Die in Fig. 2 dargestellte Verteilervorrichtung 18 besteht aus einem zylindrischen, mit dem Rotationskörper 2 mitrotierenden Rohr 21 und einem ebenso mitrotierenden konischen Rohr 22. Auf der feststehenden Achse 1 sind eine Vielzahl von Verteilern 23 angebracht, die das rotierende zylindrische Rohr fast berühren und so den Flüssigkeitsfilm auf der Innenwandung des zylindrischen Rohres 21 stören. Das konische Rohr 22 führt die Flüssigkeit zum Anfang der konischen Innenfläche 12 des Rotationskörpers 2.

Die Erfindung erstreckt sich ebenso auf eine Ausführung der Vorrichtung, bei der der Rotationskörper 2 nur einseitig auf einer feststehenden Achse 1 gelagert ist, zum Beispiel auf der Seite A (Fig. 1) und die Achse 1 auf dieser Seite, ausser den beiden Bohrungen für Vakuum und Abführung der Flüssigkeiten, eine zusätzliche Bohrung zur Zuführung der zu entgasenden Flüssigkeit 4 besitzt (nicht dargestellt).

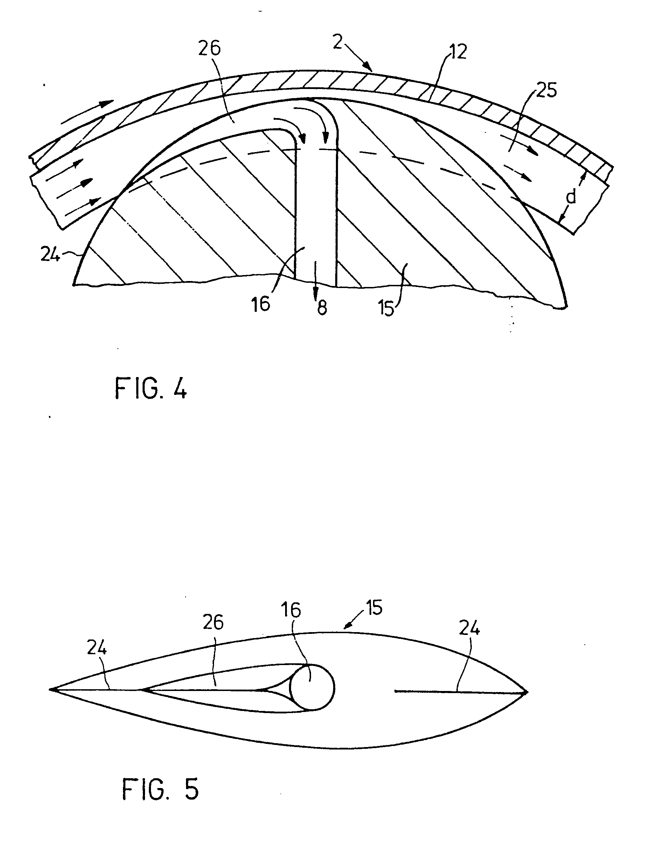

Fig. 3 zeigt eine Entnahmescheibe 15 zur Entnahme der entgasten Flüssigkeit aus dem Flüssigkeitsring 25 in dem Sammelraum 13. Die Entnahmescheibe 15 ist an der feststehenden Achse 1 befestigt und ragt mit ihrem Umfang in den Sammelraum 13. Der Umfang der Entnahmescheibe 15 ist so geformt, dass sich der Sammelraum 13 kontinuierlich verengt und in der in dem Sammelraum 13 schnell rotierenden Flüssigkeit ein hoher statischer Druck entsteht. An der Eintauchstelle in den Flüssigkeitsring 25 besitzt die Entnahmescheibe 15 eine Stromlinienform mit einer scharfen Kante 24 (Fig. 5) um die Flüssigkeit 8 in ihrer Strömung möglichst wenig zu stören und Reibung zu vermeiden. Unterhalb der Oberfläche des Flüssigkeitsringes 25 ist in die Entnahmescheibe eine sich in Strömungsrichtung verbreiternde etwa tangentiale Nut 26 eingebracht, die zu der Bohrung 16 in der Entnahmescheibe 15 führt und die unter hohem Druck stehende Flüssigkeit in die Entnahmebohrung 16 presst und gegen den Unterdruck im Rotationskörper abführt.

Fig. 4 zeigt eine vergrösserte Darstellung der Entnahmescheibe 15. Die Scheibe 15 taucht in den Flüssigkeitsring 25 mit der scharfen Kante 24 ein, nimmt die Flüssigkeit 8 mit der etwa tangential verlaufenden Nut 26 auf und presst die Flüssigkeit durch die Bohrung 16 zur Mitte des Rotationskörpers. Fig. 5 zeigt eine Aufsicht auf den Umfang der Entnahmescheibe 15 mit der scharfen Kante 24, der Nut 26 und der Entnahmebohrung 16. Funktionsbeschreibung:

Die zu entgasende Flüssigkeit 4 wird mit einer Pumpe oder durch den Unterdruck im Rotationskörper 2 zu der Vorrichtung gebracht und in die hohlgebohrte Achse 1 eingeleitet. Vorteilhafterweise kann vor dem Einlauf in die Vorrichtung eine Einrichtung mit einer Drossel oder einer scharfkantigen Blende 27 angeordnet werden. Hierdurch wird erreicht, dass die zu entgasende Flüssigkeit 4 einem plötzlichen Drucksprung unterworfen wird und sich in der Flüssigkeit bereits Gasblasen bilden, die beim Eintritt in den Unterdruckraum des Rotationskörpers sofort abgeführt werden.

In der Flüssigkeit 4 befinden sich Feststoffteilchen kleinster Grössenordnung, die in Spalten oder an ihrer Oberfläche Gasreste binden, die als Entgasungskeime bezeichnet werden können. Bei der zu entgasenden Flüssigkeit 4 ist zunächst davon auszugehen, dass ein Gleichgewicht besteht zwischen Entgasungskeimen, Gasblasen und in der Flüssigkeit 4 gelösten Gasanteilen. Das Entfernen grosser Gasblasen bereitet keine besondere Schwierigkeiten, da diese aufgrund ihres relativ grossen Durchmessers bereits eine genügend hohe Aufstiegsgeschwindigkeit besitzen und in einem Unterdruckraum oder nach einer Drossel oder Blende 27 mit einem Drucksprung beseitigt werden können. Da der ungelöste Gasanteil in Form von Blasen jedoch je nach Temperatur, Druck, Viskosität und Oberflächenspannung der Flüssigkeit nur etwa 2–5% der Gesamtmenge des gelösten Gases entspricht, genügt es nicht, nur diesen Anteil zu entfernen. Geringste Änderungen des Druckes oder der Temperatur können dazu führen, dass das Gleichgewicht gestört wird, d.h., dass gelöste Gase in die noch vorhandenen mikroskopisch kleinen Entgasungskeime diffundieren und diese zu Blasen anwachsen lassen, so dass sie Störungen bei der Weiterverarbeitung hervorrufen.

Während eine Temperaturkonstanz beim Transport von Flüssigkeiten 4 mit relativ einfachen Mitteln zu erreichen ist, sind Druckschwankungen oft nicht zu vermeiden, insbesondere bei Änderungen des Strömungsquerschnitts durch Ventile, Pumpen und scharfkantige Durchgänge. Da sich solche Einbauten oft zwangsläufig ergeben, bilden sich beim Durchfluss einer mit Gas gesättigten Flüssigkeit störende Blasen. Um dieses zu verhindern, muss die Flüssigkeit 4 so weit untersättigt werden, dass weder durch Temperatur- noch durch Druckdifferenzen Blasen entstehen können. In einer Vorphase des Entgasungsvorganges wird die oben beschriebene Einrichtung 27 bewusst so eingesetzt, dass vor der eigentlichen Entgasungseinheit 2 eine scharfkantige Drossel oder Blende vorgeschaltet wird. Das Verhältnis der Strömungsgeschwindigkeit zum Durchflussquerschnitt muss hierbei so abgestimmt sein, dass ein spontaner Drucksprung entsteht, der dazu führt, dass die einströmende Flüssigkeit 4 schlagartig übersättigt ist, so dass sich spontan sehr viele Gasblasen bilden. Das Flüssigkeits-Gas-Gemisch wird weiter zur eigentlichen Vorrichtung weitergeleitet. Während des Flüssigkeitstransportes kann aufgrund der verkürzten Diffusionswege ein Teil des gelösten Gases in die entstandenen Gasblasen diffundieren.

Die in die Vorrichtung eingeleitete Flüssigkeit 4 oder das Flüssigkeit-Gasgemisch wird in der hohlgebohrten Achse 1 zu Öffnungen 5 umgelenkt und spritzt radial auf die Verteilervorrichtung 18 (Fig. 1). Auf dem ersten konischen Rohr 19 wird die Flüssigkeit 4 auf die Umfangsgeschwindigkeit des mit dem Rotationskörper 2 rotierenden Rohres 19 und gleichzeitig durch die Zentrifugalkraft in Richtung des sich erweiternden Konus beschleunigt. Am Ende des ersten Rohres 19 wird die Flüssigkeit auf das zweite Rohr 20 aufgespritzt und zum Anfang der konischen Innenfläche 12 des Rotationskörpers 2 geleitet und auf diesen aufgespritzt.

Während der Fallzeiten zerplatzt der grösste Teil der bisher entstandenen Blasen in Folge der Volumenzunahme im Unterdruckraum. Die Flüssigkeit 4 berührt die rotierende Fläche, wird dort sehr schnell beschleunigt und erreicht nach kurzer Laufzeit dieselbe Umfangsgeschwindigkeit. Je nach Viskosität der Flüssigkeit 4 bildet sich ein mehr oder weniger dicker Film aus, der die konischen Flächen entlangläuft und sich in Folge der Durchmesserzunahme kontinuierlich verdünnt und den Anfang der konischen Innenfläche 12 des Rotationskörpers erreicht.

In der Verteilervorrichtung 18 nach Fig. 2 wird die zu entgasende Flüssigkeit 4 auf ein rotierendes zylindrisches Rohr 21 aufgespritzt und auf die Umfangsgeschwindigkeit des Rohres 21 gebracht. Durch feststehende Verteiler 23 wird der beschleunigte Flüssigkeitsfilm schlagartig abgebremst, wodurch sich ein Flüssigkeitsnebel und kleinste Tröpfchen bilden. Nach einer gewissen Flugdauer treffen die Tröpfchen wieder auf die rotierende Fläche, werden beschleunigt, abgebremst und so fort, bis die Tröpchen schliesslich den Rand des Rohres 21 erreichen und auf ein konisches Rohr 22 auftreffen und von diesem unter Verdünnung des fliessenden Filmes auf den Rotationskörper 2 auftropfen.

Auf der konischen Innenfläche 12 des Rotationskörpers 2 findet schliesslich unter Unterdruck bei einer sich stets vergrössernden Zentrifugalkraft und einem sich kontinuierlich weiter verdünnendem Flüssigkeitsfilm die Hauptentgasung der Flüssigkeit statt.

Aufgrund der geringen Schichtdicke ergeben sich sehr kurze Diffusionswege für gelöstes Gas in den Unterdruckraum und kurze Aufstiegshöhen für noch vorhandene Gasblasen. In dieser Phase wird der Entgasungsgrad, d.h. die Untersättigung der Flüssigkeit und die Abtrennung von Blasen im wesentlichen durch die Filmdicke und die Laufzeit des Filmes bestimmt. Die Fliessrichtung des Flüssigkeitsfilmes ist zum grösser werdenden Radius gerichtet, wobei die Strömungsgeschwindigkeit vom Konuswinkel, der Viskosität, dem Durchsatz und der Fliehkraft bestimmt wird.

Der dünne mit Gas untersättigte Flüssigkeitsfilm trifft am Ende der konischen Fläche 12 des Rotationskörpers 2 auf eine mitrotierende Lochscheibe 14, wird in seiner axialen Geschwindigkeit abgebremst und legt sich auf einen Flüssigkeitsring 25 im Sammelraum 13 ohne Wirbelbildung auf. Der Flüssigkeitsring 25 hat beispielsweise eine radiale Dicke d von 10 bis 20 mm. In diesen Flüssigkeitsring 25 taucht durch die Flüssigkeitsoberfläche eine feststehende kreissegmentförmige Entnahmescheibe 15 mit einer scharfen Kante 24 ein, die die Strömung der Flüssigkeit durch ihre Stromlinienform nicht wesentlich stört und somit eine Erwärmung der Flüssigkeit durch Reibung vermindert.

Durch die Optimierung der Entnahmescheibe 15 bei einer untersuchten Vorrichtung konnte die Temperaturdifferenz zwischen Einlauf E und Auslauf A bei einem Durchsatz von 4,5 l/min und einer Viskosität von 20 mPas beispielsweise von 9°C auf 4,5°C also auf die Hälfte verringert werden. Bei höherem Durchsatz erniedrigte sich die Temperaturdifferenz, da die Verweilzeit eines bestimmten Flüssigkeitsteilchens in dem Sammelraum 13 kürzer wird.

Die Entnahmescheibe 15 nimmt einen Teil der vorbeiströmenden Flüssigkeit aus dem Flüssigkeitsring 25 in einer Nut 26 auf. Die entgaste Flüssigkeit 8 hat durch ihre kinetische Rotationsenergie im Sammelraum 13 einen hohen Druck gegenüber der feststehenden Entnahmescheibe und wird so trotz des Unterdruckes im Rotationskörper 2 in die Bohrung 16 der Entnahmescheibe 15 gepresst und durch die mit der Bohrung 6 der feststehenden Achse 1 nach aussen gedrückt.

Bei einem kontinuierlichen Abfluss aus der Vorrichtung, einer kontinuierlichen Drehzahl des Rotationskörpers 2 und gleichbleibender Viskosität der Flüssigkeit 4 wird der Entgasungsgrad der Flüssigkeit 8 durch Regelung des Volumenstromes mit einem Regelventil 10 eingestellt. Als Messgrösse zur Regelung des Ventiles 10 dient die Dicke d des Flüssigkeitsringes 25.

Der Grad der Entgasung kann auch auf eine andere Art und Weise kontinuierlich oder diskontinuierlich ermittelt und zur optimalen Einstellung der Entgasungsanlage verwendet werden. Hierzu eignet sich besonders gut eine Messung des Sauerstoffgehaltes mit Messelektroden vor und nach der Entgasung, wobei aus der Differenz der Sauerstoffgehalte der Entgasungsgrad ermittelt wird. Die Messung des Sauerstoffgehaltes erlaubt unmittelbar auf die Gesamtkonzentration gelöster Luft zu schliessen (Sauerstoff + Stickstoff = 99% der Gesamtluft). Die Störgrössen bestimmter Fremdgase werden durch die Differenzbildung der Messwerte am Eingang und Ausgang der Vorrichtung weitgehend eliminiert.

**Beispiele**

In einer beispielsweisen Ausführungsform wurde eine Vorrichtung nach Fig. 1 betrieben. Die Grenzwerte der Vorrichtung lagen bei

Viskosität der Flüssigkeiten: 1 bis 1000 mPa.s
Flüssigkeitsdurchsatz: 1–12 l/min
Drehzahl des Rotationskörpers: 1000 bis 3000 U/min
niedrigste Ausgangsgaskonzentration: 8% der Sättigungskonzentration

**Beispiel 1**

Es wurde eine photographische Emulsion vor dem Einsatz an einer Begiesseinrichtung entgast um Bläschen beim Giessen zu vermeiden

| | |
|---|---|
| Viskosität der Emulsion | 200 mPa.s |
| Flüssigkeitsdurchsatz | 6 l/min |
| Einlauftemperatur | 40°C |
| Auslauftemperatur | 44°C |
| Sauerstoffkonzentration Einlauf | 6,5 mg/l $O_2$ |
| Sauerstoffkonzentration Auslauf | 1,3 mg/l $O_2$ |
| Entgasungsverhältnis | 5 |
| Drehzahl | 3000 $min^{-1}$ |
| Unterdruck | 0,08 $bar_{abs.}$ |
| Ausgangsdruck der Flüssigkeit | 4,5 bar |

**Beispiel 2**

Es wurde eine andere photographische Emulsion entgast und hierbei der Rotationskörper 2 mit Wasser von 12°C gekühlt

| | |
|---|---|
| Viskosität | 25 m Pa.s |
| Flüssigkeitsdurchsatz | 4 l/min |
| Einlauftemperatur = Auslauftemperatur | 40°C |
| Sauerstoffkonzentration Einlauf | 6,2 mg/l $O_2$ |
| Sauerstoffkonzentration Auslauf | 0,8 mg/l $O_2$ |
| Entgasungsverhältnis | 7,75 |
| Drehzahl | 3000 $min^{-1}$ |
| Unterdruck | 0,08 $bar_{abs.}$ |
| Ausgangsdruck der Flüssigkeit | 4,8 bar |

**Beispiel 3**

Die photographische Emulsion wurde wie in Beispiel 2 entgast, jedoch wurde eine Vorrichtung verwendet, die mit einer Verteilervorrichtung nach Fig. 2 ausgestattet war. Folgende Werte änderten sich gegenüber dem Beispiel 2

| | |
|---|---|
| Sauerstoffkonzentration Einlauf | 6,2 mg/l $O_2$ |
| Sauerstoffkonzentration Auslauf | 0,6 mg/l $O_2$ |
| Entgasungsverhältnis | 10,33 |
| Ausgangsdruck der Flüssigkeit | 4,4 bar |

**Beispiel 4**

Bei dem Einbau einer Drossel oder Blende 27 mit scharfen Kanten vor der Vorrichtung konnte das Entgasungsverhältnis auf 12 verbessert werden, wobei der Ausgangsdruck der Flüssigkeit geringfügig auf 4,2 bar abnahm.

**Patentansprüche**

1. Verfahren zur Entgasung von Flüssigkeiten, insbesondere von Suspensionen und Emulsionen, im Unterdruck unter Anwendung von Zentrifugalkraft zur Erzeugung einer dünnen Flüssigkeitsschicht, gekennzeichnet dadurch, dass

a) die Flüssigkeit (4) über eine hohlgebohrte feststehende Achse (1) in einen Rotationskörper (2) eingeleitet und auf eine mitrotierende Fläche aufgespritzt wird,

b) die Flüssigkeit auf eine sich konisch erweiternde Innenfläche (12) des Rotationskörpers (2) geleitet und zu einem dünnen unter Unterdruck stehendem Flüssigkeitsfilm ausgebreitet wird und sich unter dem Einfluss der Zentrifugalkraft auf der sich erweiternden konischen Fläche des Rotationskörpers (2) weiter verdünnt, entgast und zu einem ringförmigen Sammelraum (13) fliesst und

c) die entgaste blasenfreie Flüssigkeit (8) zur Mitte des Zentrifugenraumes geleitet und gegen den Unterdruck durch die hohlgebohrte feststehende Achse (1) aus dem Rotationskörper (2) ausgetragen wird.

2. Verfahren nach Anspruch 1, dadurch gekennzeichnet, dass die in den Rotationskörper (2) eingeleitete Flüssigkeit (4) zuerst auf eine Verteilervorrichtung (18) aufgespritzt wird und auf konischen mitrotierenden Rohren (19, 20) oder auf einem zylindrischen rotierenden Rohr (21) entlangfliesst und bei dem Fliessen auf dem zylindrischen Rohr (21) von Verteilern (23) mehrmals schlagartig abgebremst, von der Fläche (21) abgelöst und wieder auf die Fläche (21) geschleudert wird.

3. Verfahren nach Anspruch 1 bis 2, dadurch gekennzeichnet, dass die Flüssigkeit aus dem konischen Rotationskörper (2) über eine mitrotierende Lochscheibe (14) dem ringförmigen Sammelraum (13) zugeführt wird.

4. Verfahren nach Anspruch 1 bis 3, dadurch gekennzeichnet, dass die Flüssigkeit aus dem ringförmigen Sammelraum (13) mittels einer feststehenden Entnahmescheibe (15) unterhalb der Oberfläche des Flüssigkeitsringes (25) im ringförmigen Sammelraum (13) entnommen wird.

5. Verfahren nach Anspruch 1 bis 4, dadurch gekennzeichnet, dass die Dicke (d) des Flüssigkeitsringes (25) bei konstantem Auslauf der Flüssigkeit (4) in den Rotationskörperraum (2) durch Regelung des Volumenstromes am Einlaufventil (10) konstant gehalten wird.

6. Verfahren nach Anspruch 1 bis 5, dadurch gekennzeichnet, dass die zu entgasende Flüssigkeit während ihrer Ausbreitung auf der Innenwandung (12) des Rotationskörpers (2) durch Erhitzen oder Kühlen des Rotationskörpers (2) von aussen temperiert wird.

7. Vorrichtung zur Durchführung des Verfahrens nach Anspruch 1, bestehend aus einem Rotationskörper, in dessen Innenraum ein Unterdruck aufrechterhalten wird, einer Zuführ- und Verteileinrichtung für die zu entgasende Flüssigkeit und je einer Einrichtung zum Abführen der entgasten Flüssigkeit und des Gases, dadurch gekennzeichnet, dass

a) auf einer feststehenden Achse (1) ein konischer Rotationskörper (2) drehbar und von aussen antreibbar angeordnet ist,
b) die feststehende Achse (1) zum Einlauf der zu entgasenden Flüssigkeit (4) hohlgebohrt und mit mindestens einer Einlauföffnung (5) oder -düse zum Einspritzen der Flüssigkeit (4) in den Innenraum des Rotationskörpers (2) versehen ist,
c) für die eingespritzte Flüssigkeit (4) eine Verteilervorrichtung (18) in dem Rotationskörper (2) vorgesehen ist, die mitrotiert,
d) am weiten Ende des konischen Rotationskörpers (2) ein ringförmiger Sammelraum (13) für die entgaste Flüssigkeit (8) vorgesehen ist,
e) zur Entnahme der entgasten Flüssigkeit (8) eine Entnahmescheibe (15), mit einer etwa tangential verlaufenden Vertiefung (26) und einer Bohrung (16) versehen, an der feststehenden Achse (1) befestigt ist und in den ringförmigen Sammelraum (13) hineinragt,
f) die feststehende Achse (1) mit einer Austragsbohrung (6) versehen ist, durch welche die entgaste Flüssigkeit (8) von der Entnahmescheibe (15) abführbar und aus dem Innenraum des Rotationskörpers (2) herausführbar ist und
g) die feststehende Achse (1) eine weitere Bohrung (7) besitzt, durch welche das Gas abführbar und der Rotationskörperraum (2) auf Unterdruck bringbar ist.

8. Vorrichtung nach Anspruch 7, dadurch gekennzeichnet, dass die Verteilervorrichtung (18) aus einem zylindrischen Rohr (21) und einem konischen (22) oder zwei konischen Rohren (19, 20) besteht und an der feststehenden Achse (1) Verteiler (23) angebracht sind, die den Fluss der aufgespritzten Flüssigkeit unterbrechen.

Vorrichtung nach Anspruch 7, dadurch gekennzeichnet, dass am weiten Ende des konischen Rotationskörpers (2) eine mit diesem mitrotierende Lochscheibe (14) zur gleichmässigen Verteilung der entgasten Flüssigkeit (8) in den Ringraum (13) angeordnet ist.

10. Vorrichtung nach Anspruch 7, dadurch gekennzeichnet, dass die Entnahmescheibe (15) zumindest im Bereich des Eintauchens in den ringförmigen Sammelraum (13) so stromlinienförmig ausgeführt ist, dass sie die Flüssigkeitsströmung nicht wesentlich stört, und deren Entnahmebohrung (16) in ihrer Gesamtheit mindestens 1 mm unter der Flüssigkeitsoberfläche angeordnet ist.

**Claims**

1. Process for the degasification of liquids, in particular of suspensions and emulsions, at reduced pressure, using centrifugal force to produce a thin layer of liquid, characterised in that

a) the liquid (4) is introduced into a rotary body (2) via a hollow fixed shaft (1) and sprayed onto a surface which rotates with the apparatus,
b) the liquid is conducted to a conically widening internal surface (12) of the rotary body (2) and spread out into a thin film of liquid which is under low pressure and which under the influence of the centrifugal force becomes even thinner on the widening conical surface of the rotary body (2) and is degassed and flows to an annular collecting chamber (13) and
c) the degassed liquid (8) which is free from bubbles is conducted to the centre of the centrifugal chamber and discharged from the rotary body (2) trough the hollow fixed shaft (1) against the low pressure.

2. Process according to claim 1, characterised in that the liquid (4) conducted into the rotary body (2) is first sprayed onto a distributor device (18) and flows along conical tubes (19, 20) rotating with the device or along one cylindrical rotating tube (21) and is repeatedly and abruptly braked by distributors as it flows along the cylindrical tube (21) and is detached from the the surface (21) and thrown back again onto the surface (21).

3. Process according to claims 1 to 2, characterised in that the liquid is carried from the conical rotary body (2) to the annular collecting chamber (13) by way of a perforated disc (14) which rotates with the rotary body (2).

4. Process according to claims 1 to 3, characterised in that the liquid is removed from the annular collecting chamber (13) by means of a fixed removal disc (15) beyond the surface of the liquid ring (25) in the annular collecting chamber (13).

5. Process according to claims 1 to 4, characterised in that at constant ouflow of the liquid (4) into the interior of the rotary body (2), the thickness (d) of the liquid ring (25) is maintained constant by adjustment of the volummetric flow rate at the inlet valve (10).

6. Process according to claims 1 to 5, characterised in that the liquid to be degassed is given a certain temperature from outside by heating or cooling of the rotary body (2) while it spreads out over the internal wall (12) of said rotary body (2).

7. Apparatus for carrying out the process according to claim 1, consisting of a rotary body in the interior of which a low pressure is maintained, a supply and distributor device for the liquid to be degassed and a device for removal of the degassed liquid and a device for removal of the gas, characterised in that

a) a conical rotary body (2) is mounted on a fixed shaft (1) to be rotatable thereon and driven from outside,

b) the fixed shaft (1) is hollowed out for the inflow of the liquid (4) to be degassed and is provided with at least one inlet opening (5) or nozzle for the injection of liquid (4) into the interior of the rotary body (2),

c) a distributor device (18) for the injected liquid (4) is provided in the rotary body (2) and rotates with said rotary body,

d) an annular collecting chamber (13) for the degassed liquid (8) is provided at the wide end of the rotary body (2),

e) a removal disc (15) having a substantially tangential recess (26) and a bore (16) is attached to the fixed shaft (1) for removal of the degassed liquid (8) and extends into the annular collecting chamber (13),

f) the fixed shaft (1) is provided with a discharge bore (6) through which the degassed liquid (8) may be removed from the removal disc (15) and discharged from the interior of the body of rotation (2) and

g) the fixed shaft (1) has another bore (7) through which the gas may be discharged and the interior of the rotary body (2) may be brought to reduced pressure.

8. Apparatus according to claim 7, characterised in that the distributor device (18) consists of a cylindrical tube (21) and a conical tube (2) or two conical tubes (19, 20), and distributors (23) are arranged on the fixed shaft (1), which distributors (23) interrupt the flow of the sprayed liquid.

9. Apparatus according to claim 7, characterised in that a perforated disc (14) rotating with the conical rotary body (2) is provided at the wide end of said conical body (2) for the purpose of uniform distribution of the degassed liquid (8) in the annular chamber (13).

10. Apparatus according to claim 7, characterised in that the removal disc (15) is streamlined at least in the region where it dips into the annular collecting chamber (13) so that it does not significantly disturb the flow of liquid, and its removal bore (16) is arranged, in its entirety at least 1 mm below the liquid surface.

**Revendications**

1. Procédé de dégazage de liquides, en particulier, de suspensions et d'émulsions, en dépression et en appliquant la force centrifuge pour former une mince couche de liquide, caractérisé en ce que:

a) via un ace fixe foré creux, le liquide à dégazer (4) est introduit dans un corps de révolution (2) et est projeté sur une surface entraînée en rotation;

b) on fait passer le liquide sur une surface intérieure (12) du corps de révolution (2), qui s'élargit en cône et on l'étale en une mince pellicule de liquide subissant une dépression et, sous l'influence de la force centrifuge, ce liquide se dilue davantage sur la surface du corps de révolution (2), qui s'élargit en cône, puis il est dégazé et s'écoule vers un compartiment collecteur annulaire (13); et

c) on conduit le liquide dégazé et exempt de bulles (8) vers le centre du compartiment de centrifugation et, à l'encontre de la dépression, on l'expulse du corps de révolution (2) par l'axe fixe foré creux (1).

2. Procédé suivant la revendication 1, caractérisé en ce que le liquide (4) introduit dans le corps de révolution (2) est tout d'abord projeté sur un dispositif distributeur (18), tandis qu'il s'écoule le long de tubes coniques (19, 20) entraînés conjointement en rotation ou le long d'un tube rotatif cylindrique (21) et, lorsqu'il s'écoule sur le tube cylindrique (21), il est freiné plusieurs fois brusquement par des distributeurs (23), puis il est détaché de la surface (21) et à nouveau projeté sur cette surface (21).

3. Procédé suivant les revendications 1 et 2, caractérisé en ce que le liquide sortant du corps de révolution conique (2) est acheminé au compartiment collecteur annulaire (13) via un disque perforé (14) entraîné conjointement en rotation.

4. Procédé suivant les revendications 1 à 3, caractérisé en ce que le liquide sortant du compartiment collecteur annulaire (13) est soutiré au moyen d'un disque de soutirage fixe (15) en dessous de la surface de l'anneau de liquide (25) formé dans le compartiment collecteur annulaire (13).

5. Procédé suivant les revendications 1 à 4, caractérisé en ce que, alors que le liquide (4) sort constamment dans l'espace (2) du corps de révolution, l'épaisseur (d) de l'anneau de liquide (25) est maintenue constante en réglant le courant volumique à la soupage d'entrée (10).

6. Procédé suivant les revendications 1 à 5, caractérisé en ce que, pendant qu'il s'étale sur la paroi intérieure (12) du corps de révolution (2), le liquide à dégazer est mis en équilibre de température de l'extérieur par chauffage ou refroidissement du corps de révolution (2).

7. Dispositif pour la réalisation du procédé suivant la revendication 1, ce dispositif comprenant un corps de révolution dans l'espace intérieur duquel est maintenue une dépression, un dispositif d'alimentation et de distribution pour le liquide à dégazer et chaque fois un dispositif pour évacuer le liquide dégazé et le gaz, caractérisé en ce que:

a) un corps de révolution conique (2) est monté de façon à pouvoir tourner sur un axe fixe (1) et de façon à pouvoir être commandé de l'extérieur;

b) l'axe fixe (1) est foré creux pour l'introduction du liquide à dégazer (4) et il comporte au moins une buse ou une ouverture d'entrée (5) pour l'injection du liquide (4) dans l'espace intérieur du corps de révolution (2);

c) pour le liquide injecté (4), on prévoit, dans le corps de révolution (2), un dispositif distributeur (18) qui est entraîné conjointement en rotation;

d) à l'extrémité éloignée du corps de révolution conique (2), on prévoit un compartiment collecteur annulaire (13) pour le liquide dégazé (8);

e) pour soutirer le liquide dégazé (8), on prévoit un disque de soutirage (15) comportant une cavité (26) s'étendant à peu près tangentiellement, de même qu'un passage (16) auquel est fixé l'axe fixe (1) et qui pénètre dans le compartiment collecteur annulaire (13);

f) l'axe fixe (1) comporte un passage de sortie (6) par laquel le liquide dégazé (8) peut être évacué par le disque de soutirage (15), pour être ensuite expulsé du compartiment intérieur du corps de révolution (2);et

g) l'axe fixe (1) comporte un passage suplémentaire (7) par lequel le gaz peut être évacué et par lequel également l'espace du corps de révolution (2) peut être mis sous dépression.

8. Dispositif suivant la revendication 7, caractérisé en ce que le dispositif distributeur (18) est constitué d'un tube cylindrique (21) et d'un tube conique (22) ou de deux tubes coniques (19, 20), tandis que, sur l'axe fixe (1), on adapte des distributeurs (23) qui interrompent le flux du liquide projeté.

9. Dispositif suivant la revendication 7, caractérisé en ce que, à l'extrémité éloignée du corps de révolution conique (2), on installe un disque perforé (14) tournant conjointement en rotation avec ce corps pour distribuer uniformément le liquide dégazé (8) dans le compartiment annulaire (13).

10. Dispositif suivant la revendication 7, caractérisé en ce que, du moins dans la zone d'immersion dans le compartiment collecteur anulaire (13), le disque de soutirage (15) est réalisé sous une forme aérodynamique de telle sorte que l'écoulement du liquide ne soit pas sensiblement perturbé, tandis que le passage de soutirage (16) de ce disque est situé, dans son ensemble, au moins à 1 mm en dessous de la surface du liquide.

FIG. 1

FIG. 2

FIG. 3

FIG. 4

FIG. 5